# EUROPÄISCHE PATENTSCHRIFT

(11) **EP 0 382 150 B1**
(45) Veröffentlichungstag und Bekanntmachung des Hinweises auf die Patenterteilung: **04.05.1994**
(21) Anmeldenummer: 90102263.2
(22) Anmeldetag: 06.02.1990
(51) Int. Cl.: C08B 37/08

(54) **Verfahren zur Herstellung von aktivierten Chitosanen und deren Verwendung bei der Herstellung von Chitosanderivaten**
Process for preparing activated chitosans and their use in the preparation of chitosan derivatives
Procédé pour préparer des chitosanes activés et leur utilisation pour la préparation de dérivés de chitosane

(30) Priorität: 09.02.1989 DE 3903797
(43) Veröffentlichungstag der Anmeldung: 16.08.1990
(73) Patentinhaber: HOECHST AKTIENGESELLSCHAFT, 65926 Frankfurt am Main (DE)
(72) Erfinder: Meister, Christoph, Dr., D-6200 Wiesbaden (DE); Dönges, Reinhard, Dr., D-6232 Bad Soden am Taunus (DE)

(56) Entgegenhaltungen:
- EP-A- 0 065 491
- EP-A- 0 265 561
- WO-A-87/07618
- CHEMICAL ABSTRACTS, Band 105, Nr. 14, Oktober 1984, Seite 106, Zusammenfassung Nr. 116911p, Columbus, Ohio, US; & JP-A-61 060 701
- Römps-Chemie Lexikon. 8.Auflage, Franksch'sche Verlagshandlung, Band.1(1979), Seite.322, Stichwort "Aussalzen" und Band 5(1987), Seite 3670-3671, Stichwort "Salzeffekte".

## Beschreibung

Die vorliegende Erfindung betrifft die Herstellung von aktivierten Chitosanen und deren Verwendung bei der Herstellung von Chitosanderivaten, wobei sowohl wasserlösliche als auch wasserunlösliche Produkte erhalten werden können.

Chitosan ist ein Polysaccharid aus Aminoglukoseeinheiten und im Handel erhältlich. Die Herstellung erfolgt aus Chitin, einem Polysaccharid aus N-Acetylaminoglukoseeinheiten über alkalische Verseifung der N-Acetylgruppen. Chitin ist ein Naturprodukt und als Gerüstsubstanz in Krustentieren und Pilzgeflechten enthalten.

Im kommerziell erhältlichen Chitosan sind normalerweise 60 bis 90 % der ursprünglich im Chitin vorhandenen N-Acetylgruppen verseift. Der Durchschnittspolymerisationsgrad (DP) liegt im allgemeinen im Bereich von 500 bis 10000, während er bei nativem Chitin stets über 5000 beträgt.

Zahlreiche Chitosanderivate, deren Eigenschaften, Herstellungsverfahren und die verschiedenen Anwendungsbereiche werden in der Literatur beschrieben.

Angaben über die Anwendungsgebiete finden sich beispielsweise in "The Polysaccharides, Vol. 3, S. 439ff., Academic Press (1985)" und "Carbohydrate Polymers 3 (1983), Seiten 53-75".

Ausführliche Literaturübersichten gibt außerdem R. A. A. Muzzarelli in "Chitin, Pergamon Press (1977)", und in "Chitin in Nature and Technology, Plenum Press (1986)". Dort finden sich zusätzlich Angaben zur Herstellung verschiedener Chitosanderivate, z. B. von Chitosannitraten, -sulfaten, -sulfonaten, -sulfoniumsalzen, -xanthaten, sowie Herstellungsangaben zu Carboxymethyl-, Sulfoethyl-, Benzyl-, Acyl-, Alkyl-, N,N,N-Trialkyl-, Hydroxyalkyl-, Cyanoethylchitosanen, phosphorylierten Chitosanen und Schiff-Basen des Chitosans.

Aufschluß über die nach dem Stand der Technik übliche Arbeitsweise bei der Herstellung von Chitosanderivaten geben außerdem die folgenden Literaturstellen. In "J. Membrane Science 16 (1983), Seiten 295-308" beschreibt R. A. A. Muzzarelli die Umsetzung von Chitosan mit aliphatischen Aldehyden und die anschließende Reduktion mit NaBH₄. Die Reaktion wird in homogener essigsaurer Lösung durchgeführt. Durch Steigerung des pH-Wertes auf 10 werden die Produkte ausgefällt.

Die Artikel von R. A. A. Muzzarelli, "The Polysaccharides, Vol. 3 (1985), Seiten 417-450" und von K. Kurita, "Proc. Int. Conf. Chitin, Chitosan (1985), Seiten 287-293" sowie "Industrial Polysaccharides: Genetic Engineering, Structure/Property Relations and Applications, Elsevier Science Publishers B. V. (1987), Seiten 337 bis 346" befassen sich näher mit der Acylierung von Chitosan. Diese wird entweder homogen oder heterogen an aus saurer Lösung über Umfällen aktiviertem Chitosan durchgeführt. Beide Autoren beschäftigen sich außerdem mit der reduktiven Aminierung; K. Kurita befaßt sich zusätzlich mit der Carboxymethylierung, Sulfatierung, Cyanoethylierung und Pfropfpolymerisation.

Die Literaturstelle "H. S. Blair et al., J. Appl. Polymer Science 33 (1987), Seiten 641-656" beschreibt die Pfropfpolymerisation von Acrylamid, Methylmethacrylat und Vinylacetat auf Chitosan. Die Umsetzungen werden sowohl homogen als auch heterogen an ungefälltem, aktiviertem Chitosan durchgeführt.

In "Carbohydrate Polymers 8 (1988), Seiten 1-21" erläutert R. A. A. Muzzarelli die verschiedenen Möglichkeiten der Carboxymethylierung von Chitosan. Die Umsetzungen werden in der Regel in Gegenwart von Laugen durchgeführt.

Weitere Herstellungsangaben für Chitosanderivate sind u.a. in folgenden Literaturstellen zu finden:
Int. J. Biol. Macromol. 10 (1988), Seiten 124-125, Int. J. Biol. Macromol. 4 (1982), Seiten 246-249, Int. J. Biol. Macromol. 3 (1981), Seiten 292-296, J. Chem. Soc., Chem, Comm. (1980), Seiten 1153-1154, J. Appl. Polymer Science 31 (1986), Seiten 1951-1954, J. Appl. Polymer Science 36 (1988), Seiten 1443-1451, Makromol. Chem. 188 (1987), Seiten 1659-1664, Makromol. Chem. 186 (1985), Seiten 1239-1244, Carb. Res. 83 (1980), Seiten 389-393 sowie in den US-A 4 424 346 und EP-A 0 249 779.

In der DE-A 36 14 697 sind kosmetische Mittel auf der Basis von N-Hydroxybutyl-chitosanen und deren Herstellung beschrieben. Hierbei wird Chitosan, bestehend aus 60 bis 96 % entacetyliertem Chitin oder dessen Salzen, mit Butylenoxid im geeigneten Verhältnis zur Umsetzung gebracht. Das Chitosan oder dessen Salz kann dabei gegebenenfalls in Gegenwart saurer Katalysatoren, in einer Dispersion oder Lösung, bestehend aus Wasser und einem organischen Lösemittel, umgesetzt werden.

DE-A 36 02 402, EP-A 0 224 045 (= US-A 4 780 310) und EP-A 0 277 322 beschäftigen sich in analoger Weise mit N-Hydroxyethylchitosanen, N-Hydroxypropylchitosanen und N-Hydroxypropylethern des Chitosans. Ihre Herstellung erfolgt analog der von N-Hydroxybutylchitosan.

Als Stand der Technik sind weiterhin EP-A 0 115 574, DE-A 35 02 833 (= US-A 4 772 690) und DE-A 35 01 891 (= US-A 4 772 689) zu nennen, die sich mit Ammoniumgruppen und bevorzugt zusätzlich Hydroxyalkylgruppen enthaltenden Chitosanderivaten beschäftigen. Ihre Herstellung erfolgt aus Chitosan, Glycidyltrialkylammoniumhalogeniden und Ethylenoxid, Propylenoxid oder Glycid in Wasser oder wäßrig organischem Medium analog der oben für die Umsetzung mit Butylenoxid beschriebenen Arbeitsweise.

In den obengenannten DE-A 36 14 697, 35 01 891, 35 02 833, EP-A 0 115 574, 0 224 045 und 0 277 322 wird entweder nicht aktiviertes oder ein über Umfällen aus saurer Lösung gewonnenes aktiviertes Chitosan verwendet.

Die JP-A 61-60701 beschäftigt sich ebenfalls mit der Herstellung quartärer Ammoniumgruppen und bevorzugt zusätzlich Hydroxyalkylgruppen enthaltenden Chitosanderivaten. Ihre Herstellung erfolgt ohne Auflösung der Produkte heterogen in wäßrig organischen Suspensionsmitteln über Umsetzung von Chitosan mit quartären Alkylammoniumalkylhalogeniden, Glycidyltrialkylammoniumhalogeniden und Alkylenoxiden in Gegenwart wäßriger Natronlauge.

Die EP-A 0 193 736 beschreibt die ein- oder zweistufige Umsetzung von Chitosan mit Propylenoxid und Ethylchlorid in Gegenwart von Natronlauge in organisch wäßriger Suspension und den Einsatz der Produkte in kosmetischen Mitteln. In einer Variante wird das Chitosan vor der Umsetzung durch Behandeln mit Lauge, Abpressen und mehrmaligem Einfrieren aktiviert.

WO-A-87 07 618 betrifft ein Verfahren zur Herstellung von Aminopolysaccharidderivaten, bevorzugt Chitosanderivaten, bei dem das hochkristalline, teilweise deacylierte Chitosan zunächst in einem Lösungsmittelgemisch, in welchem das Chitosan quellbar aber im wesentlichen unlöslich ist, und Wasser suspendiert wird. Das besagte Lösungsmittelgemisch beinhaltet ein inertes, wasserlösliches, polares organisches Lösungsmittel und mindestens eine organische Säure. Geeignete polare organische Lösungsmittel sind Alkohole, wie Methanol, Ethanol und Isopropanol. Als organische Säuren werden Mono- und Dicarbonsäuren genannt, insbesondere Essigsäure. Die so erhaltene Suspension wird bei einer Temperatur und über einen Zeitraum gerührt, der einen Aufschluß des Chitosans ermöglicht.

Aus dem Stand der Technik sind verschiedene Gruppen von Verfahren zur Herstellung von Chitosanderivaten zu entnehmen, wobei mit oder ohne Aktivierung gearbeitet wird.

Eine Gruppe umfaßt das Arbeiten mit homogenen Chitosansalzlösungen. Da wegen der hohen Viskosität in starker Verdünnung gearbeitet werden muß, sind große Reaktionsvolumina erforderlich, und es fallen erhebliche Mengen an Lösemitteln an, die zur Lösung (meist 1%ig) der Chitosansalze und zur späteren Ausfällung der Chitosanderivate benötigt werden.

Eine weitere Gruppe umfaßt den direkten Umsatz von Chitosan mit den entsprechenden Reagenzien in wäßriger bzw. organischer Dispersion. Hierbei können zwar die unerwünschten hohen Lösemittelanteile der homogenen Chitosansalzlösungen vermieden werden; es ist jedoch eine ungleichmäßige und unvollständige Umsetzung zu beobachten. In manchen Fällen gehen die Produkte gegen Ende der Umsetzung größtenteils in Lösung, wodurch die verfahrenstechnischen Vorteile der heterogenen Reaktionsführung wieder verlorengehen.

Bei einer anderen Gruppe wird das Chitosan mit Lauge behandelt, d.h. vor der Derivatisierung alkalisiert. Die Umsetzung erfolgt in Wasser oder wäßrig-organischen Lösemitteln. Auch hierbei muß eine ungleichmäßige Umsetzung in Kauf genommen werden, wobei zusätzlich ein starker Abbau der Polymerkette infolge der starken Alkalität zu beobachten ist.

Bei den beiden zuletzt genannten Verfahrensgruppen ist die Einführung von stark hydrophoben und raumfüllenden Substituenten nicht beschrieben worden.

Bei einer weiteren Gruppe wird das Chitosan (ca. 1%ig) in wäßriger oder wäßrig-alkoholischer Lösung durch Zugabe von Säure gelöst und mit Lauge zu einem voluminösen Gel umgefällt. Anschließend erfolgt die Umsetzung des so aktivierten Chitosans entweder in Wasser, in wäßrig-organischer Suspension oder nach dem Waschen mit einem organischen Lösemittel in wasserfreier, organischer Suspension. Meist lösen sich die Produkte gegen Ende der Umsetzung auf. Ein wesentlicher Nachteil ist, daß sowohl bei der Aktivierung als auch bei der Umsetzung wegen der hohen Viskosität der Chitosanlösungen und des hohen Wasserrückhaltevermögens des aktivierten Chitosans in starker Verdünnung gearbeitet werben muß. Daher sind große Reaktionsvolumina erforderlich. Das aktivierte Chitosan ist wegen seiner starken Quellung außerdem verfahrenstechnisch nur schwer zu handhaben.

Bei einer weiteren Gruppe wird das Chitosan in wäßrig-alkoholischer Lösung durch Zugabe von Säure und gegebenenfalls Zugabe einer Base suspendiert, wobei nach einer gewissen Wartezeit das aktivierte Chitosan erhalten wird.

Es stellte sich zunächst die Aufgabe, ein technisch einfaches und universelles Verfahren zur Aktivierung von Chitosan zu entwickeln, welches einen guten Aufschluß des Chicosans ermöglicht und mit kleinen Reaktionsvolumina auskommt.

Eine weitere Aufgabenstellung bestand darin, das herzustellende aktivierte Chitosan gleichmäßig und in einfacher Weise zu Chitosanderivaten um zusetzen, ohne daß auch hier hohe Volumina bei der Reaktion in Kauf genommen werden müssen. Außerdem sollte die Möglichkeit geschaffen werden, auch Chitosanderivate mit stark hydrophoben und raumfüllenden Substituenten herzustellen.

Die erstgenannte Aufgabe wird gelöst bei einem Verfahren zur Aktivierung von Chitosan durch Zugabe von Säure zur Salzbildung und anschließender Zugabe von Basen, dessen kennzeichnendes Merkmal darin besteht, daß man die Säure- und die Basenzugabe in einer wäßrigen Lösung eines anorganischen Salzes durchführt, das weitgehend ein In-Lösung-Gehen der Chitosansalze verhindert.

Die zweitgenannte Aufgabe geht aus von einem Verfahren bei dem man aktiviertes Chitosan mit zur Bildung von Chitosanderivaten geeigneten Reagenzien umsetzt, dessen kennzeichnendes Merkmal darin besteht, daß man die nach dem erfindinngsgemäßen Aktivierungsverfahren hergestellten Produkte einsetzt.

Das Suspensionsmittel, das innerhalb der Aktivierung eingesetzt wird, ist vorzugsweise die wäßrige Lösung bevorzugt eines anorganischen Salzes, wobei der Salzgehalt derart gehalten wird, daß sichergestellt ist, daß weitgehend keine Chitosansalze in Lösung gehen. Bevorzugt liegt der Salzgehalt - je nach verwendetem Salz - zwischen 2 Gew.-% und der Sättigungsgrenze, insbesondere bei 5 bis 20 Gew.-%. Als Salz für das Suspensionsmedium werden bevorzugt in Wasser leicht lösliche Chloride, Nitrate, Sulfate oder Acetate eingesetzt. Besonders bewährt hat sich hierbei der Einsatz von Alkali- oder Ammoniumsalzen wie z. B. NaCl, Na₂SO₄, KCl, NH₄Cl, (NH₄)₂SO₄, Na-acetat oder Erdalkalisalzen wie z. B. CaCl₂, MgCl₂ oder MgSO₄.

Das Aufschlagsverhältnis wäßrige Lösung eines anorganischen Salzes zu Chitosan beträgt vorzugsweise 5-15:1, insbesondere 8-12:1.

Als Ausgangsprodukt für die Aktivierung kann grundsätzlich jedes Chitosan eingesetzt werden. Vorzugsweise werden jedoch Chitosane eingesetzt, die zu 40 bis 96 %, bezogen auf das Ursprungschitin, entacetyliert sind und einen Durchschnittspolymerisationsgrad (DP) von 100 bis 10000, bevorzugt von 500 bis 8000, aufweisen.

Beispiele für Säuren, die bei der Ansäuerung des Chitosans eingesetzt werden können, sind vorzugsweise HCl, HNO₃, H₂SO₄, Essigsäure und andere. Beispiele für Basen, die bei der Basenbehandlung zum Einsatz kommen, sind vorzugsweise NaOH, KOH, NH₄OH, Mg(OH)₂, Ca(OH)₂.

Besonders vorteilhaft wird bei der Aktivierung das System "NaCl-Salzlösung/HCl/NaOH" angewendet.

Es hat sich gezeigt, daß vorteilhaft bei der Ansäuerung des Chitosans ein pH-Wert von 1 bis 5, insbesondere von 2 bis 3, und nach der vorzugsweise vorzunehmenden Basenzugabe ein pH-Wert von 8 bis 13, insbesondere von 9 bis 11, eingehalten wird.

Wenn auch das Chitosan grundsätzlich in der handelsüblichen Form eingesetzt werden kann, hat es sich doch als zweckmäßig erwiesen, eine bestimmte Korngröße einzustellen. Gute Ergebnisse wurden mit Korngrößen von <1 mm, vorzugsweise von 0,05 bis 0,2 mm, erhalten.

Die Temperaturen bei der Aktivierung werden in etwa bei 20 bis 150 °C, insbesondere bei 50 bis 70 °C, gehalten, was auch vom eingesetzten Suspensionsmittel abhängt. Die Aktivierung wird vorteilhafterweise unter Rühren vorgenommen, wobei man sich gängiger Rührapparaturen bedienen kann.

Die Zeitdauer für die Aktivierung ist abhängig von der Temperatureinstellung und liegt im allgemeinen zwischen 5 und 600 Minuten. Ausreichende Aktivierungszeiten liegen vorzugsweise zwischen 10 und 60 Minuten. Vor der Weiterbehandlung mit Reagenzien, die für die Umsetzung mit Polysacchariden bzw. Aminen geeignet und allgemein bekannt sind, können die erfindungsgemäß aktivierten Produkte z. B. durch Filtration abgetrennt, von Salzen z. B. durch Auswaschen befreit und gegebenenfalls getrocknet werden.

Gegebenenfalls muß auch das Wasser aus dem aktivierten Chitosan durch geeignete Maßnahmen, z. B. durch Extrahieren mit organischen Mitteln wie Alkoholen, Dioxan und Formamid, verdrängt werden, wenn hydrolyseempfindliche Reagenzien zur Derivatherstellung verwendet werden sollen.

Das Verfahren zur Herstellung von Chitosanderivaten ist dadurch gekennzeichnet, daß man die erfindungsgemäß aktivierten Chitosanprodukte in Gegenwart von Wasser, organischen Mitteln oder in wäßrig-organischer Phase nach an sich aus dem Stand der Technik für die Umsetzung mit Polysacchariden oder Aminen befähigten, bekannten Reagenzien umsetzt. Bevorzugt wird die Umsetzung in Suspension vorgenommen. Bei der Umsetzung der erfindungsgemäß aktivierten Chitosanprodukte können auch stark hydrophobe, raumfüllende Substituenten in die Chitosanderivate eingeführt werden.

Die Umsetzungen können sowohl ohne Katalysator als auch im sauren Bereich in Anwesenheit saurer Katalysatoren (z. B. Essigsäure, Salzsäure) oder im alkalischen Bereich in Gegenwart von Basen (z. B. Alkalihydroxide oder tert. Amine) durchgeführt werden. Beim Einsatz von z. B. alkylierenden Reagenzien im neutralen oder sauren Milieu erfolgen bevorzugt N-Derivatisierungen, im basischen Milieu bevorzugt O-Derivatisierungen.

Die Reaktionszeiten und -temperaturen sind für das jeweils eingesetzte Reagenz produktspezifisch und entsprechen weitgehend den Angaben im Stand der Technik.

Die Aufarbeitung der Chitosanderivate wird in üblicher Weise vorgenommen, z. B. durch Filtration, Reinigung, z. B. in Form einer Extraktion der Nebenprodukte und der bei der Reaktion verwendeten und nicht verbrauchten Reagenzien und/oder des Mittels, in dem die Reaktion durchgeführt wurde, und Trocknung.

Die Umsetzung kann mit einem oder mehreren Reagenz(ien) durchgeführt werden, die in Kombination oder auch nacheinander eingesetzt werden. Gegebenenfalls kann eine Zwischenisolierung mit z. B. Filtration, Reinigung und Trocknung durchgeführt werden. Welche Verfahrensschritte dabei angewendet werden müssen, hängt weitgehend davon ab, welche Endprodukte hergestellt werden sollen, und sind leicht herausfindbar.

Beispiele für Reagenzien, die mit dem erfindungsgemäß aktivierten Chitosan umgesetzt werden können, sind z.B. Alkylenoxide wie Ethylenoxid, Propylenoxid, Butylenoxid, Glycid, 1,2-Epoxydodecan, 1,2-Epoxyhexadecan, Glycidyltrimethylammoniumchlorid, Glycidylether (z. B. Glycidylisopropylether), Alkylhalogenide (z. B. Methylchlorid, Ethylchlorid, Stearylchlorid), Säureanhydride (z. B. Essigsäureanhydrid), Vinylverbindungen (z. B. Methylvinylketon, Acrylnitril), Aldehyde (z. B. Acetaldehyd, Nonanaldehyd, Glyoxylsäure), reaktive Halogenverbindungen (z. B. Natriumchloracetat, β-Chlorethansulfonat, Chlorsulfonsäure, Carbonsäurechloride), Phosphorpentoxid, Cyanamide und radikalisch pfropfbare Verbindungen (z. B. Diallyldimethylammoniumchlorid, Acrylnitril) in Gegenwart eines Radikalstarters. Beim Einsatz von mehrfunktionellen Reagenzien werden vernetzte Chitosanderivate erhalten. Zweckmäßigerweise wird die Umsetzung mit Aldehyden in Gegenwart eines geeigneten Reduktionsmittels, wie Z. B. Natriumcyanoborhydrid, durchgeführt, so daß direkt die N-Alkylderivate erhalten werden.

Für Chitosanderivate kommen die verschiedensten Anwendungsgebiete in Frage. Hierzu zählen: Schlammentwässerung, Einsatz in Bohrschlamm, Verdicker (z. B. in Zementzubereitungen), Papier- und Textilhilfsmittel, Absorptionsmittel (z. B. für Wasser oder Blut), Lebensmittel- und Futtermittelzusatz, Herstellung von Membranen, Folien und Fasern, Überzugsmittel, Kunststoffteile, Trennmittel (z. B. für die Abtrennung von Metallionen aus wäßrigen Lösungen), Flockungsmittel, Einsatz in der Chromatographie, Molekularsiebe, Einsatz in der Kosmetik (z. B. für Shampoos, Zahnpasta, Haarsprays, Nagellacke usw.), Einsatz in Fungiziden (z. B. in der Landwirtschaft), Verwendung in der Immunologie, der Biochemie (z. B. für die Immobilisierung oder Abtrennung von Enzymen) und der Medizin sowie in medizinischen Geräten.

In den folgenden Beispielen wird die erfindungsgemäße Herstellung des aktivierten Chitosans sowie die Herstellung von verschiedenen Chitosanderivaten näher erläutert, ohne daß jedoch eine Einschränkung auf die angeführten Ausführungsbeispiele bestehen soll.

### I. Verfahren zur Aktivierung von Chitosan

### Methode A:

10 Teile Chitosan (DP ∼ 8000; Acetylsubstitutionsgrad ∼ 0,29) einer Korngröße von ≦ 0,1 mm werden in 100 Teilen einer wäßrigen NaCl-Lösung (NaCl 10 Gew.-%) suspendiert und unter Rühren mit 4,35 Teilen HCl (37%ig) versetzt. Der pH-Wert der Suspension beträgt 2,7. Anschließend wird 45 Minuten lang bei 60 °C gerührt, auf Raumtemperatur abgekühlt und unter Rühren mit so viel wäßriger 50%iger NaOH-Lauge versetzt bis der pH-Wert 10,0 beträgt. Anschließend wird das aktivierte Chitosan abgenutscht, mit Wasser salzfrei gewaschen und auf einen Wasseranteil von etwa 80 % abgepreßt.

Beim Einsatz von Chitosanen mit niedrigerem Molekulargewicht (DP ∼ 500 bis 1000) in der Methode A wird wegen des höheren freien Amingehaltes entsprechend mehr Salzsäure benötigt. Um den geforderten pH-Wert, der im sauren Bereich liegen sollte, einzustellen, sind nur einfache Versuche nötig.

### II. Verfahren zur Herstellung von Chitosanderivaten

### Beispiel 1

263 g eines nach Methode A aktivierten, hochmolekularen, salzfrei gewaschenen Chitosans (H₂O-Gehalt 80,9 %) werden in 260 g reinem Isopropanol suspendiert. Es werden unter Rühren 52,7 g Glycid (95%ig) und 64,6 g Glycidyltrimethylammoniumchlorid (70%ig) zugegeben. Die Suspension wird 6 h bei 80 °C gerührt. Nach dem Abkühlen wird abgesaugt, mit 75%igem Isopropanol extrahiert und das Umsetzungsprodukt getrocknet. Das erhaltene Chitosanderivat hat Substitutionsgrade von 1,1 an Glycidyl, 0,27 an quartären Ammoniumgruppen und 0,25 an Acetyl.

### Beispiel 2 (Vergleich nach dem Stand der Technik)

50 g hochmolekulares Chitosan, wie es vor der Aktivierung nach der Methode A vorliegt, wird mit 500 g 55%igem Isopropanol versetzt. Es werden unter Rühren die gleichen Verbindungen in den gleichen Mengen wie in Beispiel 1 zugesetzt. Das erhaltene Chitosanderivat hat Substitutionsgrade von 1,0 an Glycidyl, 0,27 an quartären Ammoniumgruppen und 0,26 an Acetyl.

### Beispiel 3 (Vergleich nach dem Stand der Technik)

50 g hochmolekulares Chitosan, wie es vor der Aktivierung nach der Methode A vorliegt, wird in 500 g 80%igem Isopropanol suspendiert, mit 25 g Glycidyltrimethylammoniumchlorid (70%ig) versetzt und 5 h bei 60 °C gerührt. Anschließend werden 20,7 g wäßrige NaOH-Lösung (15%ig) zugegeben, mit 40,5 g Glycid (95%ig) versetzt und weitere 5 h bei 60 °C gerührt. Anschließend wird mit Essigsäure neutralisiert, abgesaugt, das Chitosanderivat mit 80%igem Isopropanol extrahiert und getrocknet. Das erhaltene Chitosanderivat hat Substitutionsgrade von 1,1 an Glycidyl, 0,26 an quartären Ammoniumgruppen und 0,06 an Acetyl.

Während sich das Produkt nach Beispiel 1 leicht in Wasser löst und lediglich tolerierbare unlösliche Rückstände von 3,8 % aufweist, sind die Produkte, die nach den Vergleichsbeispielen 2 und 3 hergestellt worden sind, schwer löslich und haben unlösliche Rückstände von 16,0 bzw. 13,9 %. Wegen des relativ hohen Prozentsatzes an unlöslichen Anteilen sind solche Produkte, wie die nach den Vergleichsbeispielen hergestellten, nicht allgemein einsetzbar.

In den folgenden Beispielen zur Herstellung von wasserlöslichen Chitosanderivaten wird ein nach der erfindungsgemäßen Methode A aktiviertes Chitosanprodukt verwendet.

### Beispiel 4

250 g eines erfindungsgemäß aktivierten, hochmolekularen Chitosans (H₂O-Gehalt ∼ 80%) werden in soviel tert. Butanol, Isopropanol bzw. Aceton suspendiert, daß der Wassergehalt im Suspensionsmittel im Bereich von 40 bis 50 % liegt. Der pH-Wert beträgt 9 bis 10.

Es werden verschiedene Mengen an Glycidyltrimethylammoniumchlorid (70%ig, 37,7 bis 62,5 g) und Ethylenoxid (25,5 bis 63,8 g) zugegeben. Die Suspension wird etwa 8 bis 10 h bei 90 °C gerührt. Nach dem Abkühlen wird abgenutscht. Die Derivate werden mit etwa 80%igem Aceton extrahiert und getrocknet. Die Substitutionsgrade betragen je nach Einsatzmenge der Substanzen 1,6 bis 2,5 an Hydroxyethyl und 0,19 bis 0,29 an quartären Ammoniumgruppen. Die Acetylsubstitutionsgrade liegen im Bereich von 0,22 bis 0,26.

Beispiel 4 wird mit Aceton als Suspensionsmittel zweistufig durchgeführt, wobei zuerst 4 h bei 80 °C mit 37,7 g Glycidyltrimethylammoniumchlorid (70%ig) und dann 9 h bei 80 °C mit 63,8 Ethylenoxid umgesetzt wird. Die Substitutionsgrade betragen 0,45 an quartären Ammoniumgruppen, 2,5 an Hydroxyethyl und 0,22 an Acetyl.

Die wasserunlöslichen Rückstände aller Derivate liegen unter 0,2 Gew.-%.

### Beispiel 5

Entsprechend Beispiel 4 werden 250 g aktiviertes, hochmolekulares Chitosan in Gegenwart von 244 g t-Butanol als Suspensionsmittel mit 37,7 g Glycidyltrimethylammoniumchlorid (70%ig) und 67,3 g Propylenoxid umgesetzt. Nach Aufarbeitung erhält man ein Chitosanderivat mit Substitutionsgraden von 0,36 an quartären Ammoniumgruppen, 1,3 an Hydroxypropyl und 0,25 an Acetyl.

Der wasserunlösliche Rückstand beträgt 1,9 Gew.-%.

### Beispiel 6

209 g eines erfindungsgemäß aktivierten, niedermolekularen Chitosans (H₂O-Gehalt 76,1 %) werden in 200 g Isopropanol bzw. Aceton suspendiert. Anschließend werden 113,1 g Propylenoxid zudosiert und die Suspensionen etwa 9,5 h bei 90 °C gerührt. Nach dem Abkühlen wird mit wenig Aceton verdünnt, filtriert, mit 90%igem Aceton extrahiert und getrocknet. Das Chitosanderivat hat in beiden Fällen Substitutionsgrade von 2,0 an Hydroxypropyl und 0,1 an Acetyl.

Der wasserunlösliche Rückstand beträgt 1,2 Gew.-%.

### Beispiel 7

107,5 g eines erfindungsgemäß aktivierten, hochmolekularen Chitosans mit einem Wassergehalt von 76,7 Gew.-% werden in einer Mischung aus 123,8 g t-Butanol und 117,3 g Triethylamin suspendiert. Anschließend werden 106,1 g Methylchlorid zudosiert und 6 h bei 80 °C gerührt. Das Reaktionsprodukt wird abgesaugt, im neutralen Bereich mit 80%igem Isopropanol extrahiert, mit Aceton entwässert und getrocknet. Das erhaltene quartäre Methylchitosan hat Substitutionsgrade von 0,7 an quartären Trimethylammoniumgruppen und 0,22 an Acetyl. Es ist klar wasserlöslich und hat einen Rückstand von lediglich 0,1 Gew.-%.

### Beispiel 8

255 g eines erfindungsgemäß aktivierten, hochmolekularen Chitosans mit einem Wassergehalt von 80,4 Gew.-% werden in 307,5 g Aceton suspendiert. Nachdem der pH-Wert auf 9,5 eingestellt ist, werden 38,1 g Ethylenoxid zugegeben und 10 h bei 90 °C gerührt. Nach dem Abkühlen wird mit 12,6 g Essigsäure versetzt und mit 63,5 g Ethylenoxid weitere 6 h bei 80 °C umgesetzt. Das Reaktionsgemisch wird abgesaugt, mit 80%igem Aceton extrahiert, mit Aceton entwässert und getrocknet. Das erhaltene Hydroxyethylchitosan ist klar wasserlöslich. Der wasserunlösliche Rückstand beträgt lediglich 0,1 Gew.-%. Die Substitutionsgrade des Derivats betragen 2,1 an Hydroxyethyl, 0,14 an quartären Ammoniumgruppen und 0,21 an Acetyl.

Werden anstelle der erfindungsgemäß aktivierten Chitosane nicht aktivierte (nach dem Stand der Technik) für die Herstellung der vorstehend genannten Derivate verwendet, zeigen die Produkte in allen Fällen erhebliche wasserunlösliche Rückstände (etwa 12 bis 14 Gew.-%).

In den folgenden Beispielen zur Herstellung von wasserunlöslichen Chitosanderivaten wird ein nach der erfindungsgemäßen Methode B aktiviertes, hochmolekulares Chitosan verwendet, das vom Suspensionsmittel abfiltriert und mit Wasser gewaschen worden ist.

### Beispiel 9

474 g eines erfindungsgemäß aktivierten Chitosans mit einem Wassergehalt von 78,9 % werden in 600 g Isopropanol suspendiert. Es werden 213,4 g 1,2-Epoxydodekan bzw. 278,4 g 1,2-Epoxyhexadekan zugegeben und 7 h bei 110 °C gerührt, nachdem der pH-Wert auf etwa 9,5 eingestellt worden ist. Anschließend wird filtriert, mehrmals mit 75%igem Isopropanol, Aceton und Benzin gewaschen und getrocknet. Die Substitutionsgrade betragen 0,77 an Hydroxydodecyl bzw. 0,29 an Hydroxyhexadecyl und in beiden Fällen 0,19 an Acetyl.

Das N-Hydroxydodecylchitosan ist hauptsächlich löslich in 5 % LiCl/Dimethylacetamid und teilweise löslich in Dichloressigsäure, während das N-Hydroxyhexadecylchitosan in diesen Lösemitteln lediglich quillt. Beide Derivate quellen stark in unpolaren Lösemitteln wie Toluol und Benzin.

### Beispiel 10

30 g des nach Beispiel 9 hergestellten N-Hydroxydodecylchitosans bzw. 23,6 g des N-Hydroxyhexadecylchitosans werden in 300 g 80%igem t-Butanol suspendiert und unter Rühren mit 3,88 g Natronlauge (50%ig) versetzt. Anschließend werden 56,3 g Propylenoxid zudosiert und 10 h bei 90 °C gerührt. Nach dem Abkühlen wird mit 4,9 g HCl (36%ig) neutralisiert, mit Wasser salzfrei gewaschen und bei 60 °C im Vakuum getrocknet. Die Substitutionsgrade betragen 0,7 an Hydroxypropyl und 0,02 an Acetyl für das N-Hydroxydodecylchitosanderivat bzw. 2,1 an Hydroxypropyl und 0,05 an Acetyl für das N-Hydroxyhexadecylderivat.

Die erhaltenen Derivate sind löslich in Dimethylsulfoxid, Dichloressigsäure, 5 % LiCl/Dimethylacetamid und bei starker Quellung teilweise löslich in mehrwertigen Alkoholen wie Ethylenglykol, Propylenglykol und Chlorhydrin. Sie quellen in einwertigen Alkoholen, Dimethylacetamid und Dimethylformamid.

### Beispiel 11

31 g des nach Beispiel 9 hergestellten N-Hydroxydodecylchitosans bzw. 23,8 g des N-Hydroxyhexadecylchitosans werden in einer Mischung aus 150 g Essigsäure und 250 g Essigsäureanhydrid suspendiert. Nach Zugabe von 1 g Perchlorsäure wird 4 Tage bei Raumtemperatur gerührt. Das Reaktionsgemisch wird mit Wasser verdünnt, abgesaugt, in Wasser aufgenommen, neutralisiert, mit Wasser salzfrei gewaschen und im Vakuum bei 50 °C getrocknet. Die Substitutionsgrade betragen 1,1 an Acetyl für das N-Hydroxydodecylderivat bzw. 1,5 für das N-Hydroxyhexadecylderivat.

Das C₁₂-Derivat ist löslich in Dichloressigsäure, in 5 % LiCl/Dimethylacetamid und teilweise löslich in Chlorhydrin. Das C₁₆-Derivat löst sich nur in Dichloressigsäure. Beide Derivate quellen stark in Toluol, Sulfolan, Dimethylsulfoxid, Pyridin und Ethanolamin.

### Beispiel 12

248 g eines erfindungsgemäß aktivierten Chitosans (H₂O-Gehalt 200 g) werden in 300 g Isopropanol suspendiert und bei einem pH-Wert von 10 mit 40,8 g Methylvinylketon 8 h bei 80 °C gerührt. Nach dem Abkühlen wird filtriert, mit 75%igem Isopropanol gewaschen, mit Aceton entwässert und getrocknet.

Das Derivat (Substitutionsgrad an 3-Oxobutyl = 1,4, an Acetyl = 0,14) ist überwiegend löslich in 5 % LiCl/Dimethylacetamid und teilweise löslich unter starker Quellung in Dichloressigsäure und Chlorhydrin. In Toluol und Benzin wird ebenfalls eine deutliche Quellung beobachtet. Das Hydrochlorid zeigt ein starkes Wasseraufnahmevermögen und bildet in Wasser ein Gel.

### Beispiel 13

454 g eines erfindungsgemäß aktivierten Chitosans mit einem Wassergehalt von 404 g werden in 600 g Methanol suspendiert. Es werden 81,8 g Nonanal zugesetzt, und der pH-Wert wird auf 5,3 mit HCl eingestellt.

Unter Rühren wird die Suspension mit 21,8 g Na·BH₃CN versetzt. Der allmählich ansteigende pH-Wert wird wiederholt in Abständen von 3 bis 4 Tagen auf 6 eingestellt.

Nach Abschluß der Reaktion wird mit verdünnter Natronlauge auf einen pH-Wert von 11 eingestellt, abgesaugt, mit Wasser salzfrei extrahiert und mit Aceton entwässert. Anschließend wird mit Benzin gewaschen und das Produkt bei 40 °C im Vakuum getrocknet. Man findet Substitutionsgrade von 1,4 an Nonyl und 0,04 an Acetyl.

Mehrtägiges Rühren in 50%iger Essigsäure ergibt keine Änderung im Stickstoffgehalt des N-Nonylchitosans. Das Produkt ist vollständig in Dichloressigsäure, überwiegend in 5 % LiCl/Dimethylacetamid und Chlorhydrin löslich. Es quillt sehr stark in Toluol.

### Beispiel 14

30 g des gemäß Beispiel 13 hergestellten N-Nonylchitosans werden in 333 g 90%igem t-Butanol suspendiert und unter intensivem Rühren mit 3,6 g Natronlauge (50%ig) versetzt. Anschließend werden 54 g Propylenoxid zudosiert. Das Reaktionsgemisch wird 10 h bei 90 °C gerührt. Nach dem Abkühlen wird mit 4,6 g HCl (36%ig) neutralisiert, das Reaktionsgemisch mit Wasser verdünnt, das Produkt abgesaugt, mit Wasser gewaschen und im Vakuum bei 50 °C getrocknet.

Das Hydroxypropyl-N-nonylchitosan hat Substitutionsgrade von 0,8 an Hydroxypropyl und 0,01 an Acetyl und ist löslich in Dichloressigsäure, 5 % LiCl/Dimethylacetamid und Chlorhydrin sowie teilweise löslich in Dimethylsulfoxid. Es quillt stark vorzugsweise in längerkettigen und mehrwertigen Alkoholen, wie z. B. in Isobutanol, Dodekanol, Ethylenglykol, Propylenglykol, sowie in Dioxan, Dimethylglykol, Methylenchlorid, Dimethylformamid und Dimethylacetamid.

### Beispiel 15

34,2 g des nach Beispiel 13 hergestellten N-Nonylchitosans werden gemäß Beispiel 11 acetyliert. Der Substitutionsgrad an Acetyl beträgt 2,6.

Das Acetyl-N-nonylchitosan ist löslich in Dichloressigsäure, 5 % LiCl/Dimethylacetamid, Chlorhydrin, überwiegend löslich in Sulfolan und teilweise löslich in Dimethylsulfoxid. Das Produkt quillt stark in Essigester, Dimethylglykol, Aceton, Toluol, Methylenchlorid, Pyridin, Dimethylformamid und Dimethylacetamid.

### Beispiel 16

229 g eines erfindungsgemäß aktivierten Chitosans (H₂O-Gehalt 78,2 %) werden mit Methanol wasserfrei gewaschen. Das methanolfeuchte Chitosan wird in 200 g Methanol suspendiert , mit 116,5 g Dodecenylbernsteinsäureanhydrid versetzt und 17 h bei 70 °C gerührt. Nach dem Abkühlen und Absaugen wird mit 80%igem Isopropanol salzfrei gewaschen, danach wird mit Aceton gewaschen. Das Produkt wird an der Luft getrocknet. Es hat einen Substitutionsgrad von 0,49 an Succinyl und 0,28 an Acetyl.

Das (3-Dodecenyl)-succinylchitosan ist nur in Chlorhydrin teilweise löslich. Es quillt sehr stark in Dichloressigsäure, 5 % LiCl/Dimethylacetamid, Ethylenglykol, Propylenglykol und Sulfolan.

### Beispiel 17

93,5 g eines erfindungsgemäß aktivierten Chitosans (H₂O-Gehalt 81,5 %) werden mit Dioxan gewaschen, um das noch vorhandene Wasser zu verdrängen. Das feuchte Produkt wird in 200 g Dioxan suspendiert. Nach Zugabe von 27,7 g wasserfreiem Pyridin werden unter Rühren 52,9 g Isononansäurechlorid zugetropft, und die Suspension wird 3 Tage bei Raumtemperatur gerührt. Das Reaktionsprodukt wird in Wasser aufgenommen, abgesaugt, anschließend zunächst bei pH 11 und dann bei pH 7 mit 80%igem Aceton salzfrei gewaschen und im Vakuum bei 50 °C getrocknet.

Man findet Substitutionsgrade von 2,1 an Isononanoyl und 0,29 an Acetyl.

Das Isononanoylchitosan ist nur in Chloressigsäure löslich. In Chlorhydrin, 5 % LiCl/Dimethylacetamid, Pyridin und Toluol erfolgt eine starke, in Methylenchlorid und Sulfolan eine mäßige Quellung.

Bei allen Beispielen, die die wasserunlöslichen Produkte betreffen, sind bei der Lösung in den jeweils genannten Lösemitteln keine wesentlichen Rückstände und bei der Quellung keine Klumpenbildungen zu finden, was auf eine entsprechend gute Umsetzung bei der Herstellung der Derivate aus den erfindungsgemäß aktivierten Chitosanen schließen läßt. Wie die Beispiele weiterhin zeigen, ist es auch möglich, stark hydrophobe und raumfüllende Substituenten mit hohen Substitutionsgraden in das Chitosan einzuführen, wenn die erfindungsgemäß aktivierten Chitosane als Ausgangsmaterialien eingesetzt werden.

## Patentansprüche

1. Verfahren zur Aktivierung von Chitosan durch Zugabe von Säure zur Salzbildung und anschließender Zugabe von Basen, dadurch gekennzeichnet, daß man die Säure- und die Basenzugabe in einer wäßrigen Lösung eines anorganischen Salzes durchführt, das weitgehend ein In-Lösung-Gehen des Chitosansalzes verhindert.

2. Verfahren nach Anspruch 1, dadurch gekennzeichnet, daß man ein auf eine Korngröße von <1 mm zerkleinertes Chitosan einsetzt.

3. Verfahren nach Anspruch 2, dadurch gekennzeichnet, daß man ein auf eine Korngröße von 0,05 bis 0,2 mm zerkleinertes Chitsosan einsetzt.

4. Verfahren nach einem der Ansprüche 1 bis 3 dadurch gekennzeichnet, daß der Salzgehalt der wäßrigen Lösung 2 % bis zur Sättigungsgrenze beträgt.

5. Verfahren nach einem der Ansprüche 1 bis 4, dadurch gekennzeichnet, daß man für die Salzlösung Chloride, Nitrate, Sulfate oder Acetate einsetzt.

6. Verfahren nach einem der Ansprüche 1 bis 5, dadurch gekennzeichnet, daß man die Aktivierung bei einer Temperatur von 20 bis 150 °C vornimmt.

7. Verfahren nach Anspruch 6, dadurch gekennzeichnet, daß man die Aktivierung bei 50 bis 70 °C vornimmt.

8. Verfahren nach einem der Ansprüche 1 bis 7, dadurch gekennzeichnet, daß man die Aktivierung während eines Zeitraums von 5 bis 600 min durchführt.

9. Verfahren nach Anspruch 8, dadurch gekennzeichnet, daß man die Aktivierung während eines Zeitraums von 10 bis 60 min durchführt.

10. Verfahren nach einem der Ansprüche 1 bis 9, dadurch gekennzeichnet, daß man bei der Ansäuerung des Chitosans einen pH-Wert von 1 bis 5 einhält.

11. Verfahren nach Anspruch 10, dadurch gekennzeichnet, daß man einen pH-Wert von 2 bis 3 einhält.

12. Verfahren nach einem der Ansprüche 1 bis 11, dadurch gekennzeichnet, daß man nach der Basenzugabe einen pH-Wert von 8 bis 13 einhält.

13. Verfahren nach Anspruch 12, dadurch gekennzeichnet, daß man einen pH-Wert von 9 bis 11 einhält.

14. Verfahren nach einem der Ansprüche 1 bis 13, dadurch gekennzeichnet, daß man die Aktivierung unter Rühren vornimmt.

15. Verfahren zur Herstellung von Chitosanderivaten, dadurch gekennzeichnet, daß man ein nach den Ansprüchen 1 bis 14 aktiviertes Chitosan mit an sich bekannten Reagenzien, die allgemein für die Umsetzung von Polysacchariden bzw. Aminen geeignet sind, umsetzt.

16. Verfahren nach Anspruch 15, dadurch gekennzeichnet, daß man ein nach den Ansprüchen 1 bis 14 aktiviertes Chitosan mit mindestens einem Alkylenoxid, Glycidylether, Alkylhalogenid, Säureanhydrid, Vinylverbindung, Aldehyd, reaktiven Halogenverbindung, Phosphorpentoxid, Cyanamid oder radikalisch pfropfbarer Verbindung in Gegenwart eines Radikalstarters umsetzt.

17. Verfahren nach Anspruch 15, dadurch gekennzeichnet, daß man ein Chitosan einsetzt, das in wäßriger, salzhaltiger Suspension aktiviert, nach der Aktivierung abfiltriert, durch Auswaschen mit entsprechenden für das Salz löslichen Lösemitteln von Salzrückständen befreit und gegebenenfalls getrocknet ist.

## Claims

1. A process for activating chitosan by adding acid for salt formation, followed by adding bases, which comprises carrying out the addition of acid and the addition of bases in an aqueous solution of an inorganic salt which largely prevents the chitosan salts from dissolving.

2. The process as claimed in claim 1, wherein the chitosan employed has been comminuted to a particle size of <1 mm.

3. The process as claimed in claim 2, wherein the chitosan employed has been comminuted to a particle size of 0.05 to 0.2 mm.

4. The process as claimed in any one of claims 1 to 3, wherein the salt content of the aqueous solution is 2% up to the saturation limit.

5. The process as claimed in any one of claims 1 to 4, wherein chlorides, nitrates, sulfates or acetates are employed for the salt solution.

6. The process as claimed in any one of claims 1 to 5, wherein the activation is carried out at a temperature of from 20 to 150°C.

7. The process as claimed in claim 6, wherein the activation is carried out at 50 to 70°C.

8. The process as claimed in any one of claims 1 to 7, wherein the activation is carried out during a period of from 5 to 600 minutes.

9. The process as claimed in claim 8, wherein the activation is carried out during a period of from 10 to 60 minutes.

10. The process as claimed in any one of claims 1 to 9, wherein a pH of from 1 to 5 is maintained when the chitosan is acidified.

11. The process as claimed in claim 10, wherein a pH of from 2 to 3 is maintained.

12. The process as claimed in any one of claims 1 to 11, wherein a pH of from 8 to 13 is maintained after the bases have been added.

13. The process as claimed in claim 12, wherein a pH of from 9 to 11 is maintained.

14. The process as claimed in any one of claims 1 to 13, wherein the activation is carried out while stirring.

15. A process for the preparation of chitosan derivatives, which comprises reacting a chitosan which has been activated according to any of claims 1 to 14 with reagents which are known per se and which are generally suitable for reacting polysaccharides or amines.

16. The process as claimed in claim 15, which comprises reaching a chitosan which has been activated according to any of claims 1 to 14 with at least one alkylene oxide, glycidyl ether, alkyl halide, acid anhydride, vinyl compound, aldehyde, reactive halogen compound, phophorus pentoxide, cyanamide or compound which can be grafted by means of free radicals in the presence of a free-radical initiator.

17. The process as claimed in claim 15, wherein a chitosan is employed which has been activated in aqueous, salt-containing suspension, filtered off after the activation, freed from salt residues by washing with appropriate solvents in which the salt is soluble, and, if appropriate, dried.

## Revendications

1. Procédé pour l'activation du chitosane par addition d'acide pour la formation de sels et ensuite par addition de bases, caractérisé en ce qu'on réalise l'addition de l'acide et l'addition de la base dans une solution aqueuse d'un sel minéral qui empêche essentiellement le passage dans la solution du sel de chitosane.

2. Procédé selon la revendication 1, caractérisé en ce qu'on utilise un chitosane broyé, jusqu'à une taille des grains <1 mm.

3. Procédé selon la revendication 2, caractérisé en ce qu'on utilise un chitosane broyé, jusqu'à une taille des grains de 0,05 à 0,2 mm.

4. Procédé selon l'une des revendications 1 à 3, caractérisé en ce que la teneur en sels de la solution aqueuse est comprise entre 2 % et la limite de saturation.

5. Procédé selon l'une des revendications 1 à 4, caractérisé en ce qu'on utilise, en tant que solution de sels des chlorures, des nitrates, des sulfates ou des acétates.

6. Procédé selon l'une des revendications 1 à 5, caractérisé en ce qu'on effectue l'activation à une température de 20 à 150 °C.

7. Procédé selon la revendication 6, caractérisé en ce qu'on effectue l'activation à une température de 50 à 70 °C.

8. Procédé selon l'une des revendications 1 à 7, caractérisé en ce qu'on effectue l'activation pendant une durée de 5 à 600 minutes.

9. Procédé selon la revendication 8, caractérisé en ce qu'on effectue l'activation pendant une durée de 10 à 60 minutes.

10. Procédé selon l'une des revendications 1 à 9, caractérisé en ce qu'on maintient une valeur de pH de 1 à 5 au cours de l'acidification du chitosane.

11. Procédé selon la revendication 10, caractérisé en ce qu'on maintient un pH de 2 à 3.

12. Procédé selon l'une des revendications 1 à 11, caractérisé en ce qu'on maintient, après addition de la base, un pH de 8 à 13.

13. Procédé selon la revendication 12, caractérisé en ce qu'on maintient un pH de 9 à 11.

14. Procédé selon l'une des revendications 1 à 13, caractérisé en ce qu'on effectue l'activation sous agitation.

15. Procédé pour la préparation de dérivés du chitosane, caractérisé en ce qu'on fait réagir un chitosane activé selon les revendications 1 à 14, avec des réactifs connus en soi, qui sont appropriés de façon générale pour la réaction avec des polysaccharides ou des amines.

16. Procédé selon la revendication 15, caractérisé en ce qu'on fait réagir un chitosane activé selon les revendications 1 à 14, avec au moins un oxyde d'alkylène, l'éther de glycidyle, un halogénure d'alkyle, un anhydride d'acide, un composé vinylique, un aldéhyde, un composé halogéné réactif, le pentoxyde de phosphore, le cyanamide ou un composé que l'on peut greffer par voie radicalaire en présence d'un amorceur radicalaire.

17. Procédé selon la revendication 15, caractérisé en ce qu'on utilise un chitosane qui est activé dans une suspension aqueuse saline, que l'on filtre après l'activation, que l'on lave pour le débarrasser des résidus de sels avec un solvant correspondant pour dissoudre le sel et que l'on sèche éventuellement.
